# EUROPÄISCHE PATENTSCHRIFT

(11) **EP 2 505 431 B1**
(45) Veröffentlichungstag und Bekanntmachung des Hinweises auf die Patenterteilung: **14.09.2016**
(21) Anmeldenummer: 12159133.3
(22) Anmeldetag: 13.03.2012
(51) Int. Cl.: B60Q 3/02, B60Q 1/26

(54) **Griffbauteil eines Kraftfahrzeuges**
Handle component of a motor vehicle
Moyen d'engagement d'un véhicule automobile

(30) Priorität: 01.04.2011 DE 102011001737
(43) Veröffentlichungstag der Anmeldung: 03.10.2012
(73) Patentinhaber: International Automotive Components Group GmbH, 40472 Düsseldorf (DE)
(72) Erfinder: Gutt, Stephan, 80798 München (DE); Cannon, Carter Scott, 80799 München (DE)
(74) Vertreter: Liesegang, Eva

(56) Entgegenhaltungen:
- WO-A1-2008/137634
- CA-A1- 2 511 073
- DE-A1- 19 947 752
- DE-A1-102008 046 935
- US-A1- 2003 081 401

## Beschreibung

Die Erfindung betrifft ein Griffbauteil eines Kraftfahrzeuges gemäß dem Oberbegriff von Patentanspruch 1. Die Erfindung ist insbesondere anwendbar auf Griffbauteile, die an einer Innenverkleidung eines Kraftfahrzeuges angebracht sind, beispielsweise auf einen Haltegriff, einen Zuziehgriff, eine Reling oder dergleichen an oder über einer Fahrzeugtür, an einem Dachhimmel, an einer Fahrzeugkonsole, wie einer Mittelkonsole, an einer Heckklappe oder an einem Ladeboden. Die Erfindung ist auch anwendbar auf Haltestangen, eine Reling oder ein anderes Griffbauteil an der Außenseite eines Kraftfahrzeuges.

Aus der GB 2469617 A ist eine Innenverkleidung für eine Fahrzeugtür bekannt, mit einem Türgriff und einer Beleuchtungseinrichtung. Zwischen einzelnen Verkleidungsteilen ist eine Öffnung vorgesehen, durch die das Licht der Beleuchtungseinrichtung austreten kann, um die Innenverkleidung im Bereich des Türgriffs zu beleuchten und so anzuzeigen, ob die Tür geöffnet ist. Die Anordnung der Beleuchtungseinrichtung in den Öffnungen der Innenverkleidungsteile erfordert eine spezielle Anpassung der Innenverkleidung an die Beleuchtung und eine aufwendige Montage der Leuchtmittel hinter der Innenverkleidung.

Aus der DE 198 05 771 A1 ist eine Beleuchtungseinrichtung für Kraftfahrzeuge unter Verwendung von Leuchtdioden bekannt, die als Teil eines Innenrückspiegels, einer Zierleiste, eines Türgriffs oder eines Außenrückspiegels ausgebildet sein kann. Die Beleuchtungseinrichtung kann als Abdeckring oder Abdeckkappe eines Außenrückspiegels ausgebildet sein. Mit der Beleuchtung eines Griffbauteils oder seiner Umgebung befasst sich dieses Dokument nicht.

Weitere Dokumente, die eine Innenraum- oder Außenraumbeleuchtung von Kraftfahrzeugen betreffen, sind DE 10 2009 022 806 A1, DE 10 2007 033 218 A1; DE 10 2004 001 466 A1; DE 102 11 123 A1; DE 100 46 840 A1; DE 198 09 716 A1; DE 603 19 691 T2; DE 10 2006 019 284 A1; DE 10 2006 024 194 A1; DE 10 2007 013 924 A1; DE 10 2008 023 407 A1; DE 10 2009 005 558 A1; und DE 20 2005 003 591 U1.

Die WO 2008/137634 A1 offenbart ein Griffbauteil eines Kraftfahrzeuges mit einem Beleuchtungsmodul, das in ein Griffende integriert ist.

Es ist eine Aufgabe der Erfindung, eine Beleuchtung für ein Griffbauteil oder die Umgebung des Griffbauteils eines Kraftfahrzeuges anzugeben, die einfach in den vorhandenen Aufbau der Fahrzeugverkleidung integriert werden kann.

Diese Aufgabe wird durch ein Griffbauteil gemäß Patentanspruch 1 gelöst. Bevorzugte Ausführungsformen sind in den Unteransprüchen angegeben.

Die Erfindung sieht ein Griffbauteil eines Kraftfahrzeuges vor, mit einem Korpus und wenigstens einem dekorativen Anbauteil, wobei eine Lichtquelle in das Anbauteil integriert ist. Die Lichtquelle, die der Beleuchtung des Griffbauteils und seiner Umgebung dient, kann erfindungsgemäß einfach in die vorhandene Struktur der Innenausstattung integriert werden. Das Anbauteil ist ein Bauteil, das auf den Korpus des Griffbauteils aufgesetzt werden kann, so dass die Beleuchtungseinrichtung und ihre Versorgungs- und Ansteuerleitungen nicht durch das Innere des Korpus geführt werden müssen. Die Erfindung erfordert somit keine Anpassung der Gestaltung des Griffbauteils und/oder der Innenverkleidung und keinen Eingriff in eine gegebenenfalls auf den Griffbauteil oder die Innenverkleidung aufgebrachte Kaschierung oder andere Oberflächengestaltung. Die Unterbringung der Lichtquelle in dem dekorativen Anbauteil erlaubt es vielmehr, das Griffbauteil und die es tragende Innenverkleidung ohne irgendeine Modifikation herzustellen, wobei das die Lichtquelle enthaltende Anbauteil einfach auf den Korpus des Griffbauteils aufgebracht wird. Diese Lösung erlaubt es auch, für gleiche Fahrzeugmodelle, Griffbauteile mit und ohne Beleuchtung herzustellen sowie gleiche Anbauteile für unterschiedliche Griffmodelle zu verwenden. Insbesondere bei hochwertigeren Fahrzeugmodellen, bei denen Innenverkleidung und Griffbauteil mit Leder oder einem anderen Material kaschiert sind, löst die Erfindung auf einfache Weise Probleme, die im Stand der Technik dadurch entstehen, dass für die Beleuchtung ein Durchbruch durch den Träger der Innenverkleidung und/oder den Korpus des Griffbauteils und somit auch durch die darauf aufgebrachte Kaschierung vorgenommen werden muss. Selbstverständlich ist die Erfindung nicht auf eine kaschierte Innenausstattung beschränkt.

Das Anbauteil ist ein Ring oder Teilring, der auf den Korpus des Griffbauteils aufgebracht wird.

Das Anbauteil kann in dem Korpus form- und/oder kraftschlüssig gehalten sein. Es kann durch seine Gestalt selbst positionierend sein. Vorzugsweise ist das Anbauteil an dem Korpus lösbar befestigt, beispielsweise mittels einer Rast- oder Schnappverbindung. Es ist auch möglich, das Anbauteil durch zusätzliche Mittel, wie Stifte oder Klammern, zu befestigen. Das Anbauteil und mit diesem die Lichtquelle können somit auf einfache Weise an dem Griffbauteil präzise positioniert und befestigt werden, ohne dass der Korpus des Griffbauteils für die Beleuchtung besonders angepasst werden müsste oder Spezialwerkzeuge benötigt würden.

In der bevorzugten Ausführungsform der Erfindung umfasst die Lichtquelle eine oder mehrere LEDs, beispielsweise eine LED, zwei oder drei LEDs. Die Erfindung ist nicht auf die Verwendung von LEDs beschränkt. Die Lichtquelle ist in einer Ausführungsform Teil eines Beleuchtungsmoduls, das ferner eine Leiterplatte, welche die Lichtquelle trägt, und einen Schaltkreis zur Ansteuerung der Lichtquelle auf dieser Leiterplatte umfasst. Die Leiterplatte ist vorzugsweise eine flexible Leiterplatte, beispielsweise ein FPC- oder FR4-Substrat, welches die Versorgungs- und/oder Ansteuerleitungen für die Lichtquelle trägt. Auch starre Leiterplatten können verwendet werden, und die Lichtquelle kann auch ganz ohne Leiterplatte montiert werden. Besonders bevorzugt wird ein Beleuchtungsmodul mit einer flexiblen Leiterplatte und einer oder mehreren LEDs sowie mit einem elektrischen Anschluss-Stecker aufgebaut. Darüber hinaus kann ein Gehäuse für die LEDs in das Beleuchtungsmodul integriert sein, das eine Licht formende Abdeckung umfasst, beispielsweise aus einem PMMA-Material oder einem anderem transparenten Material, um die Lichtabgabe zu richten und zu optimieren.

Die Lichtquelle ist mit dem Anbauteil vorzugsweise fest verbunden, beispielsweise an das Anbauteil angeklebt, angeschweißt oder angeformt, mit diesem verrastet oder in dieses eingebettet.

Vorzugsweise weist das Anbauteil eine Öffnung, z. B ein Langloch, auf, bei der das von der Lichtquelle ausgestrahlte Licht austritt. In dieser Öffnung kann eine Licht formende Abdeckung angeordnet sein, z.B. eine Linsenanordnung oder ein Diffusor oder irgendeine andere Licht formende Abdeckung, wie die oben genannten transparenten Materialien. Es ist auch möglich, das Anbauteil insgesamt aus einem transparenten oder semitransparenten Material herzustellen. Dieses Material kann selbst die Lichtquelle bilden, z. B. bei Verwendung einer Elektrolumineszenz-Beleuchtung. Die Abstrahlrichtung der Lichtquelle ist grundsätzlich nicht beschränkt, eine Rundumleuchte liegt ebenso im Bereich der Erfindung wie eine gerichtete Lichtabgabe.

In der bevorzugten Ausführung der Erfindung sind die Versorgungs- und/oder Ansteuerleitungen der Lichtquelle, vorzugsweise mittels der flexiblen Leiterplatte, an der Außenseite des Korpus zu der Lichtquelle geführt. Es ist somit nicht notwendig, in dem Korpus einen Durchbruch zur Führung der Versorgungs- und/oder Ansteuerleitungen vorzusehen.

Die Erfindung ist im Folgenden anhand beispielhafter Ausführungsformen mit Bezug auf die Zeichnungen näher erläutert. In den Figuren zeigen:
- Fig. 1: eine isometrische Darstellung einer Tür-Innenverkleidung eines Kraftfahrzeuges mit einem Griffbauteil gemäß der Erfindung;
- Fig. 2: eine isometrische Darstellung einer modifizierten Tür-Innenverkleidung eines Kraftfahrzeuges mit einem Griffbauteil gemäß der Erfindung;
- Fig. 3: eine isometrische Darstellung der Heckklappe und des Laderaums eines Kraftfahrzeuges mit Griffbauteilen gemäß der Erfindung;
- Fig. 4: eine isometrische Darstellung einer Mittelkonsole eines Kraftfahrzeuges mit Griffbauteilen gemäß der Erfindung;
- Fig. 5: eine isometrische Darstellung eines Teils des Innenraums eines Kraftfahrzeugs mit einem Griffbauteil gemäß der Erfindung;
- Fig. 6a: eine Explosionsdarstellung des Griffbauteils der Fig. 1;
- Fig. 6b und 6c: weitere Darstellungen des Griffbauteils der Fig. 1 in teilweise bzw. vollständig montiertem Zustand;
- Fig. 7a und 7b: isometrische Darstellungen einer modifizierten Ausführung des Griffbauteils der Fig. 6a bis 6c;
- Fig. 8: eine Teilansicht einer weiteren modifizierten Ausführung des Griffbauteils der Fig. 6 a bis 6c;
- Fig. 9: eine isometrische Darstellung eines Anbauteils mit Beleuchtungsmodul für ein Griffbauteil gemäß der Erfindung; und
- Fig. 10a bis 10j: isometrische Darstellungen verschiedener Ausführungen von Anbauteilen zur Verwendung mit einem Griffbauteil gemäß der Erfindung.

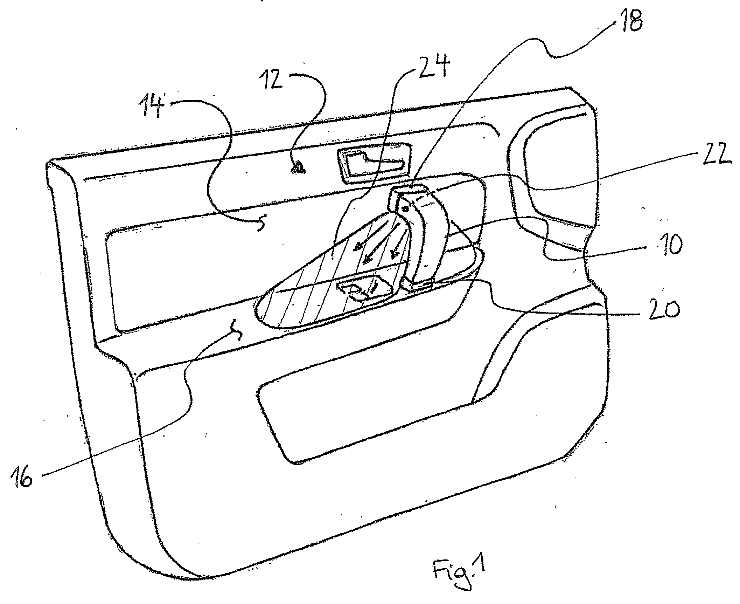

Fig. 1 zeigt ein Ausführungsbeispiel eines erfindungsgemäßen Griffbauteils 10 in Form eines Zuziehgriffs, der an der Innenverkleidung 12 einer Fahrzeugtür angebracht ist. In dem gezeigten Ausführungsbeispiel umfasst die Innenverkleidung einen Einsatz 14 und eine Armauflage 16, die jeweils durch Formteile auf an sich bekannte Art und Weise gebildet sind. In die Tür-Innenverkleidung 12 sind weitere an sich bekannte Komponenten, wie ein Ablagefach, Betätigungsschalter für Fensterheber, ein Türöffnerhebel etc. integriert, die nicht Gegenstand der Erfindung sind und hier nicht mit weiteren Einzelheiten beschrieben werden müssen.

An der Innenverkleidung 12 ist das Griffbauteil 10 auf an sich bekannte Weise angebracht. In dem gezeigten Ausführungsbeispiel ist der Griffbauteil 10 an seinen beiden Enden, d.h. dort, wo er mit der Innenverkleidung 12 verbunden ist, durch dekorative Ringe 18, 20 abgeschlossen. Anstelle der Ringe können auch Teilringe vorgesehen sein. Ein oder mehrere solche Anbauteile können an verschiedenen Positionen an dem Griffbauteil angeordnet sein. Die Ringe 18, 20 bilden einerseits dekorative Elemente, die dem Kraftfahrzeug ein höherwertiges Aussehen verleihen; andererseits dienen sie auch als Einfassung für die Ränder einer gegebenenfalls auf den Griffbauteil 10 aufgebrachten Kaschierung, z.B. aus Leder, und bilden einen technischen und optischen Abschluss des Griffbauteils. Die Ringe 18, 20 sind Beispiele für das erfindungsgemäße Anbauteil zur Aufnahme einer Lichtquelle, die in Fig. 1 schematisch bei 22 dargestellt ist. Die Lichtquelle 22 ist in den Ring 18 - also in ein Anbauteil des Griffbauteils 10 - integriert, um einen Teil der Umgebung des Griffbauteils 10 oder das Griffbauteil selbst zu beleuchten. Das Anbauteil kann auch selbst die Lichtquelle bilden. Der in dem Ausführungsbeispiel der Fig. 1 von der Lichtquelle 22 ausgeleuchtete Bereich 24 ist schraffiert angedeutet. Wie weiter unten noch erläutert ist, ist die Lichtquelle 22 Teil eines Beleuchtungsmoduls.

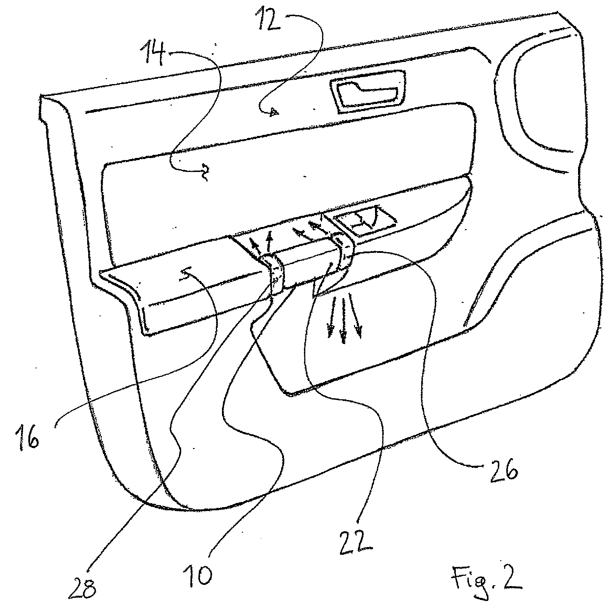

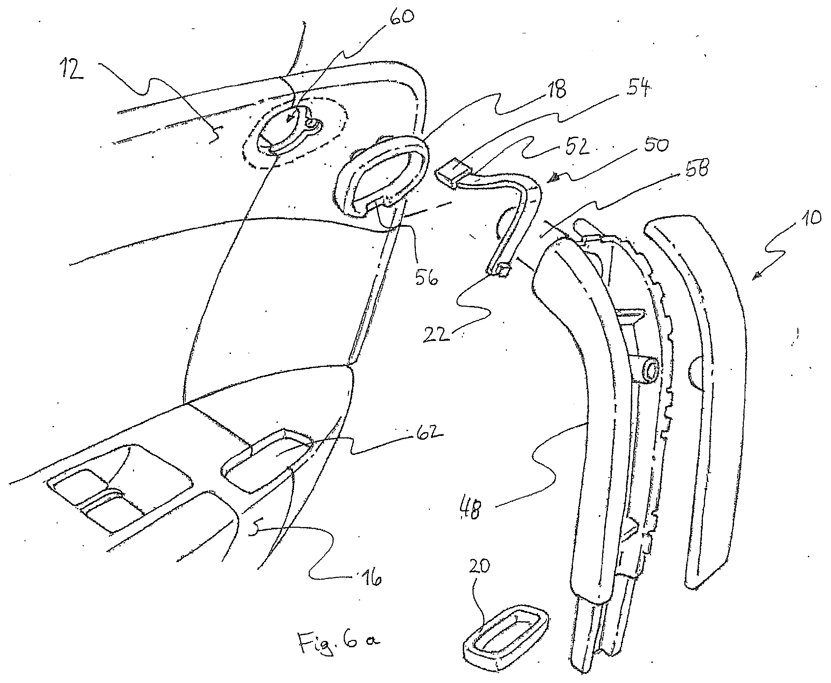

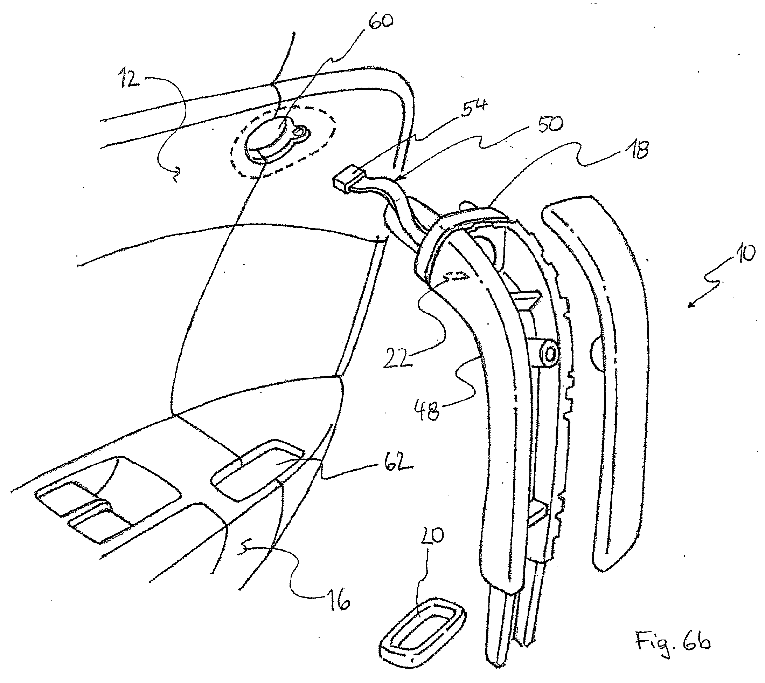

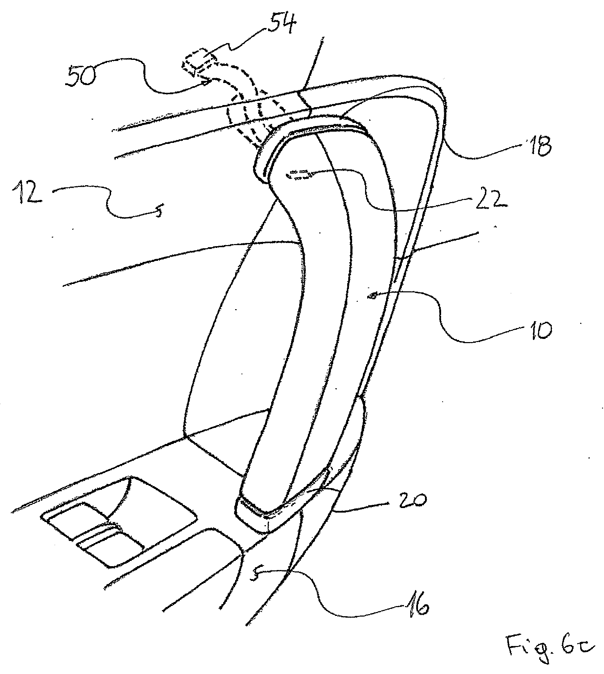

Fig. 2 zeigt eine alternative Anordnung des erfindungsgemäßen Griffbauteils an einer Tür-Innenverkleidung 12 eines Kraftfahrzeuges. Entsprechende Komponenten sind mit denselben Bezugszeichen bezeichnet wie in Fig. 1. In der Ausführung der Fig. 2 ist das Griffbauteil 10 im Bereich einer Armauflage 16 im Wesentlichen waagrecht angeordnet und durch zwei Ringe 26, 28 abgeschlossen. Anstelle einer festen Griffstange kann in dieser und den anderen Ausführungsbeispielen auch eine flexible Schlaufe vorgesehen sein. Selbstverständlich sind die Ringe bzw. das Anbauteil nicht notwendig an den Enden des Griffbauteils angeordnet, sondern an beliebiger Position. Ebenso wie in der vorhergehenden und in den folgenden Ausführungsbeispielen bilden die Ringe dekorative Anbauteile zur Aufnahme der Lichtquelle eines Beleuchtungsmoduls (in Fig. 2 nicht gezeigt). In Fig. 2 ist die Abstrahlrichtung der Lichtquelle durch Pfeile angedeutet. Jede andere Anstrahlrichtung sowie eine Rundumbeleuchtung und eine Beleuchtung des Griffes selbst liegen im Bereich der Erfindung. Möglichkeiten zur Unterbringung und Anordnung des Beleuchtungsmoduls und der Lichtquelle sind mit Bezug auf Fig. 6 ff. unten beschrieben, wobei die dort beschriebenen Möglichkeiten der Unterbringung und Anordnung grundsätzlich für alle Ausführungsbeispiele gelten. Gleiches gilt für die Unterbringung und Führung von Ansteuer- und Versorgungsleitungen für die Lichtquelle.

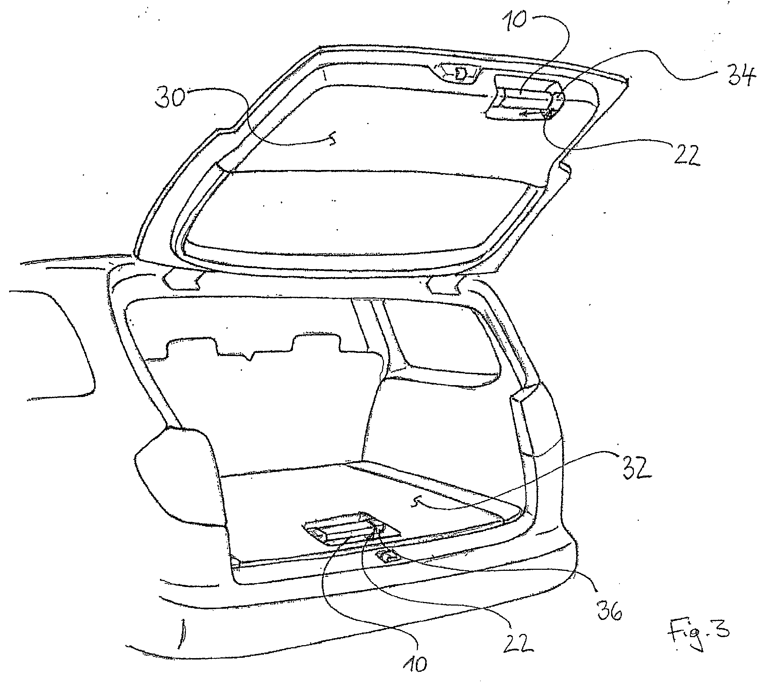

Fig. 3 zeigt ein weiteres Ausführungsbeispiel, bei dem erfindungsgemäße Griffbauteile 10 an der Innenverkleidung 30 einer Heckklappe sowie an dem Ladeboden 32 des Kofferraums eines Kraftfahrzeuges angebracht sind. Auch in diesem Ausführungsbeispiel sind die Griffbauteile 10 durch Ringe 34, 36 abgeschlossen; insofern gilt das oben Gesagte. In die Ringe 34, 36 ist jeweils eine Lichtquelle integriert, die in Fig. 3 mit 22 bezeichnet, jedoch nicht im Einzelnen gezeigt ist.

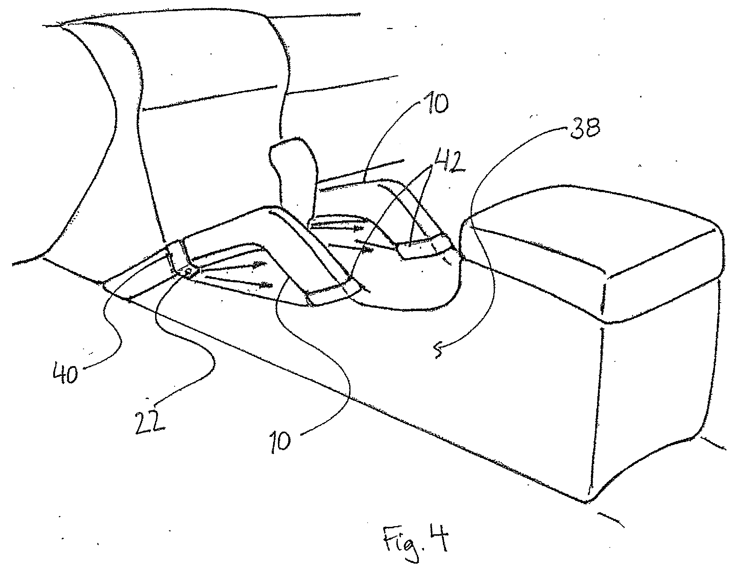

Fig. 4 zeigt ein weiteres Beispiel für die Anordnung der erfindungsgemäßen Griffbauteile 10 an der Mittelkonsole 38 eines Kraftfahrzeuges. Auch in diesem Beispiel sind die Griffbauteile 10 durch Ringe 40, 42 abgeschlossen, wobei jeweils in einen der Ringe 40 erfindungsgemäß die Lichtquelle 22 integriert ist, was wiederum in der Figur nicht im Einzelnen gezeigt ist.

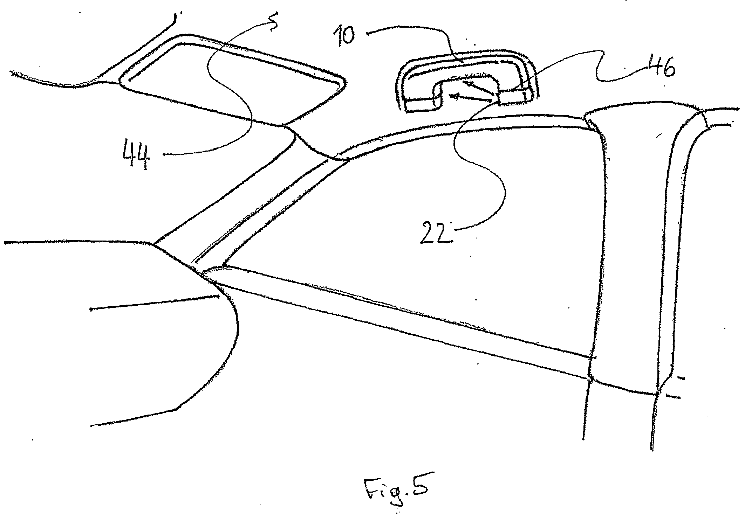

Ein weiteres Beispiel für die Anordnung des erfindungsgemäßen Griffbauteils an dem Dachhimmel 44 eines Kraftfahrzeuges ist in Fig. 5 dargestellt. Das Griffbauteil 10 weist auch in diesem Ausführungsbeispiel zwei Ringe 46 an seinen Enden auf, wobei in wenigstens einen der Ringe eine Lichtquelle 22 integriert ist. Wie in den vorhergehenden Ausführungen, ist die Abstrahlrichtung der Lichtquelle durch Pfeile angedeutet. In dem in Fig. 5 gezeigten Beispiel kann das Griffbauteil 10 ausklappbar sein.

Wie oben dargelegt, ist die Erfindung anwendbar auf Griffbauteile eines Kraftfahrzeuges; es ist nicht beabsichtigt, sie auch zur Beleuchtung anderer Fahrzeugteile, insbesondere Türschlösser und Türöffnerhebel von Autotüren, anzuwenden.

Die Lichtquelle kann so angesteuert werden, dass sie neben der Beleuchtungsfunktion auch eine Anzeigefunktion hat, indem z.B. durch Blinken ein Warnhinweis gegeben wird. Z.B ist denkbar, in einem Zuziehgriff an einer Fahrzeugtür durch Blinken anzuzeigen, wenn die Tür nicht geöffnet oder geschlossen werden sollte, weil sich z.B. ein Hindernis im Bereich der Tür befindet.

In den gezeigten Ausführungsbeispielen des erfindungsgemäßen Griffbauteils ist das Anbauteil zur Aufnahme der Lichtquelle in Form eines Rings ausgebildet, der an einem Ende des Griffbauteils angeordnet ist und neben seiner dekorativen Funktion auch dazu dienen kann, den Rand einer gegebenenfalls auf den Griffbauteil aufgebrachten Kaschierung einzufassen bzw. einen sauberen Abschluss des Griffbauteiles bereitzustellen. Anstelle eines Rings kann erfindungsgemäß auch ein Teilring zur Aufnahme der Lichtquelle dienen. Das Anbauteil ist vorzugsweise ein Spritzgussteil, das beispielsweise aus Polycarbonat (PC), Acrylnitril-Butadien-Styrol (ABS), transparentem PC, Polymethylmetacrylat (PMMA) oder einem anderen geeigneten thermoplastischen Polymer bestehen kann. Es ist auch möglich, das Anbauteil beispielsweise aus Aluminium mittels Spritzguss, mechanischer Bearbeitung oder einem anderen Bearbeitungsprozess herzustellen. Das Anbauteil kann lackiert oder auf andere Weise beschichtet sein, beispielsweise mittels Dampfabscheidung einer dekorativen, opaken oder semitransparenten Oberflächengestaltung, durch das Aufbringen eines Films während des Formungsprozesses, oder durch andere Beschichtungsverfahren, wie hydrographische Verfahren, Tintentstrahl-Druckverfahren etc. Das Anbauteil kann ferner eine widerstandsfähige harte Schutzschicht aufweisen. Die Oberfläche kann auf beliebige Weise bearbeitet sein, z. B. genarbt oder ungenarbt, lackiert, verchromt, poliert etc. Das oben gesagt gilt für sämtlich Ausführungsformen der Erfindung.

Das Anbauteil ist mit dem Griff vorzugsweise lösbar verbunden; es kann beispielsweise mittels Rastnasen oder Clips in das Griffbauteil eingerastet werden. Es kann an dem Griffbauteil mittels Widerhaken in Position gehalten werden und alternativ oder zusätzlich im Presssitz auf dem Griffbauteil aufgenommen sein. Wenn das Anbauteil die Form eines Rings hat, wird es z. B. von einem Ende her auf das Griffbauteil aufgeschoben und durch seine Form darauf selbsttätig positioniert. Selbstverständlich ist es auch möglich, das Anbauteil mit dem Griffbauteil zu verkleben, wobei eine lösbare Verbindung bevorzugt wird. Die Montage und Demontage des Anbauteils an dem Griffbauteil ist unkompliziert und vorzugsweise ohne Werkzeug zu bewerkstelligen, so dass das Anbauteil mit der integrierten Lichtquelle leicht montiert und ausgetauscht werden kann. Das Anbauteil kann auch als Befestigungselement für das Griffbauteil dienen.

Fig. 6a bis 6c zeigen eine Explosionsdarstellung sowie zusammengesetzte Darstellungen einer bevorzugten Ausführungsform des Griffbauteils gemäß der Erfindung. Entsprechende Komponenten wie in den vorstehenden Ausführungsbeispielen sind mit denselben Bezugszeichen bezeichnet. Für diese gilt das oben Gesagte. In dem in den Fig. 6a bis 6c gezeigten Ausführungsbeispiel ist das Griffbauteil an der Innenverkleidung 12 einer Fahrzeugtür angebracht, wobei die Erfindung in gleicher Weise für Griffbauteile an anderen Positionen des Fahrzeugs gilt. Das Griffbauteil 10 umfasst in dem gezeigten Ausführungsbeispiel einen zweiteiligen Korpus 48, auf den eine Kaschierung, z.B. aus Leder, aufgebracht werden kann (in Fig. 6 nicht gezeigt). Der Korpus 48 ist an seinen beiden Enden, mit denen er in der Innenverkleidung 12 aufgenommen wird, verjüngt, und zwei Ringe 18, 20 werden auf die Enden des Korpus aufgeschoben, um einen optischen Akzent zwischen Griffbauteil 10 und Tür-Innenverkleidung 12 zu bilden. Erfindungsgemäß ist an einem oder beiden Enden des Griffbauteils 10 ein Beleuchtungsmodul 50 mit einer Lichtquelle 22 angeordnet, wobei die Lichtquelle 22 in den Ring 18 integriert ist. In dem gezeigten Ausführungsbeispiel umfasst das Beleuchtungsmodul 50 die Lichtquelle 22, einen Anschlussstecker 54 und eine flexible Leiterplatte 52, welche die Lichtquelle trägt und mit dem Anschlussstecker verbindet. Die flexible Leiterplatte 52 trägt Ansteuer- und Versorgungsleitungen für die Lichtquelle 22 sowie gegebenenfalls weitere Schaltkreiselemente zur Ansteuerung der Lichtquelle.

In der bevorzugten Ausführung wird die Lichtquelle 22 durch eine oder mehrere LEDs gebildet, die als SMD (Surface Mounted Device)-Bauteile direkt auf die flexible Leiterplatte 52, oder auch eine starre Leiterplatte, aufgelötet sein können. Die LEDs können, müssen jedoch nicht, ein Licht leitendes Gehäuse aufweisen. Die flexible Leiterplatte 52 kann ein FR4-Substrat, einen FPC (Ferrit Polymer Composit)-Film oder einen anderen geeigneten flexiblen Träger für die Leiterbahnen zur Verbindung der Lichtquelle 22 mit dem Anschlussstecker 54 sowie gegebenenfalls zur Aufnahme weiterer Schaltkreiselemente aufweisen.

In alternativen Ausgestaltungen kann die Lichtquelle, insbesondere LED, auch auf einer starren oder flexiblen Leiterplatte aufgenommen sein, welche über einzelne runde Verbindungskabel oder ein Flachbandkabel mit einem elektrischen Anschlussstecker verbunden ist. Es ist auch möglich, die Lichtquelle in einem Halter mit integrierter Leiterplatte unterzubringen und über Kabel mit dem Anschlussstecker zu verbinden. Es ist ferner möglich, die Lichtquelle direkt in das Anbauteil, in dem gezeigten Ausführungsbeispiel den Ring, einzubetten und nach Bedarf zu verdrahten.

In dem in Fig. 6a bis 6c gezeigten Ausführungsbeispiel wird die Lichtquelle 22 des Beleuchtungsmoduls 50 derart in dem Ring 18 aufgenommen, dass das Licht durch eine Ausnehmung 56 in dem Ring 18 hindurch abstrahlen kann. Die flexible Leiterplatte 52 wird an die Außenseite des Korpus 48 geführt, wobei sie in dem gezeigten Ausführungsbeispiel eng an dem verjüngten Abschnitt 58 des Korpus 48 anliegt. Gemeinsam mit diesem verjüngten Abschnitt 58 werden die flexible Leiterplatte 52 und der Anschlussstecker 54 durch eine Ausnehmung 60 in der Innenverkleidung 12 zur Rückseite der Innenverkleidung geführt, wo sie angeschlossen werden können.

Die Montage des erfindungsgemäßen Griffbauteils 10 läuft wie folgt ab: Die Ringe 18, 20 werden auf die Enden des Griffbauteils geschoben, wobei die Lichtquelle 22 bereits in den Ring 18 integriert sein kann. Anschließend wir der Griffbauteil 10 an der Innenverkleidung 12 angebracht, wobei die flexible Leiterplatte 52 und der Anschlussstecker 54 des Beleuchtungsmoduls 50 zusammen mit dem verjüngten Abschnitt 58 durch die Ausnehmung 60 in der Innenverkleidung geführt. Später wird das gegenüberliegende Ende des Griffbauteils 10 in eine entsprechende Ausnehmung 62 der Innenverkleidung eingebracht. Für die Montage und den Anschluss der Beleuchtungseinheit 50 ist keinerlei Anpassung des Korpus 48 des Griffbauteils 10 notwendig, weil das gesamte Beleuchtungsmodul 50 außerhalb des Korpus untergebracht ist. Ferner ist die Montage und Positionierung der Lichtquelle 22 an dem Korpus 48 äußerst unkompliziert, weil diese einfach zusammen mit dem Ring 18 auf den Korpus 48 aufgeschoben und durch die Formgebung des Rings 18 automatisch positioniert werden kann.

Während in der gezeigten Ausführungsform der Ring mit der Lichtquelle zunächst auf das Griffbauteil aufgeschoben wird, bevor dasGriftbauteil an der Innenverkleidung befestigt wird, ist es auch möglich, den Ring mit der Lichtquelle zunächst an der Innenverkleidung anzubringen und anschließend den Korpus 48 des Griffbauteils zu montieren. Das Beleuchtungsmodul 50 kann bei der Montage am Griffbauteil 10 oder an der Innenverkleidung 12 angebracht sein. Das Beleuchtungsmodul kann ferner zwischen dem Griffbauteil und dem Ring oder zwischen dem Ring und der Innenverkleidung angeordnet werden. Schließlich ist es auch möglich, das Beleuchtungsmodul innerhalb des Griffbauteils anzuordnen und die Lichtquelle 22 über eine Durchgangsöffnung in dem Korpus 48 des Griftbauteils zu dem Ring zu führen.

Das oben Gesagte gilt in gleicher Weise für jedes andere dekorative Anbauteil und ist nicht beschränkt auf einen geschlossenen Ring. Als Anbauteil kann auch ein Teilring verwendet werden. Die Form ist insbesondere abhängig von dem Design des Griffbauteils sowie den gegenüberliegenden Oberflächen der Innenverkleidung.

Der die Lichtquelle 22 tragende Teil des Beleuchtungsmoduls oder die Lichtquelle an sich kann an dem Anbauteil beispielsweise mittels eines beschichteten Klebefilms, z.B. ein PSA (Pressure Sensitive Activity)-Klebeband, angebracht sein. In alternativen Ausführungen kann der die Lichtquelle tragende Teil des Beleuchtungsmoduls im Presssitz in den Anbauteil gehalten sein und zusätzlich oder alternativ durch Kleben, Schweißen, Heißkleben oder andere geeignete Verbindungstechniken mit dem Anbauteil verbunden sein. Es ist möglich, den die Lichtquelle tragenden Teil des Beleuchtungsmoduls und das Anbauteil formschlüssig zu verbinden, und es ist möglich, den die Lichtquelle tragenden Teil des Beleuchtungsmoduls an das Anbauteil anzuformen oder in dieses einzubetten. Das gleiche gilt für die Lichtquelle an sich. Dies gilt selbstverständlich für alle der beschriebenen Ausführungsformen.

Erfindungsgemäß kann ferner vorgesehen sein, die Lichtquelle mit einer Optik zu kombinieren, die entweder in dem Beleuchtungsmodul oder an dem Anbauteil vorgesehen ist. In der einfachsten Ausführung umfasst das Anbauteil lediglich eine Öffnung, durch welche die Lichtquelle, beispielsweise LED, ohne weitere Optik hindurchstrahlt. In anderen Ausführungsformen kann eine optische Linse in das Anbauteil integriert oder in dem Beleuchtungsmodul vorgesehen sein. Auch andere Licht formende optische Elemente können verwendet werden, beispielsweise beschichtete oder strukturierte Folien mit einem Streu- oder Beugungsmuster, einschließlich solcher mit Nanostrukturen.

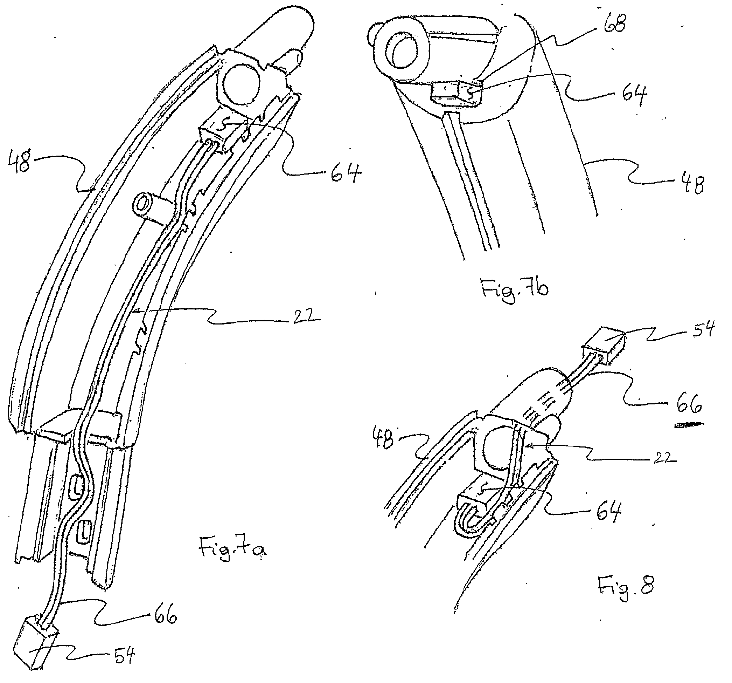

Fig. 7a und 7b sowie Fig. 8 zeigen zwei weitere Ausgestaltungen zur Anordnung des Beleuchtungsmoduls an dem Griffbauteil gemäß der Erfindung. In den gezeigten Ausführungsbeispielen umfasst das Beleuchtungsmodul 50 jeweils eine Lichtquelle 22 in Form z.B. einer LED, die in einem LED-Gehäuse 64 aufgenommen ist, welches in dem gezeigten Ausführungsbeispiel über ein Flachbandkabel 66 mit dem Anschlussstecker 54 verbunden ist. In einer anderen Ausgestaltung ist es beispielsweise auch möglich, das Beleuchtungsmodul bzw. den Ring oder die Leuchteinheit mit einem Stecker auszurüsten und ein Kabel anzustecken. Die Ausführungsformen der Fig. 7a, 7b und 8 unterscheiden sich von der vorhergehenden Ausführung dadurch, dass das Beleuchtungsmodul 50 durch das Innere des Korpus 48 des Griffbauteils geführt ist. Hierzu ist es notwendig, in dem Korpus 48 einen Durchbruch 68 zur Durchführung des LED Gehäuses 64 oder seiner Anschlussleitungen vorzusehen. Das Flachbandkabel 66, ein Rundkabel oder jede andere geeignete Verbindung zwischen der Lichtquelle und dem Anschlussstecker, wird in diesem Ausführungsbeispiel durch den Korpus 48 geführt und tritt an einem der beiden Enden des Griffbauteils aus, wie in Fig. 7a und Fig. 8 gezeigt.

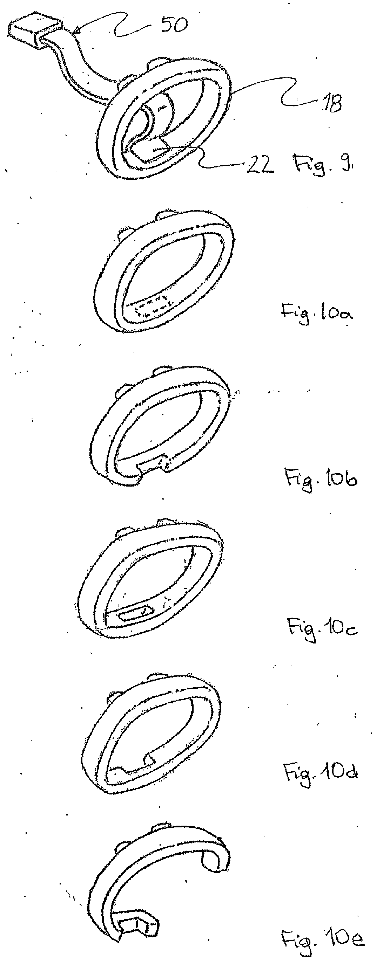

Fig. 9 zeigt ein Beispiel, wie die Lichtquelle 22 des Beleuchtungsmoduls 50 relativ zu dem Ring 18 angeordnet sein kann, wobei in diesem Ausführungsbeispiel die Lichtquelle in den Ring eingebettet ist.

Die Fig. 10a bis 10j zeigen weitere Beispiele für Anbauteile zur Aufnahme der Lichtquelle in dem erfindungsgemäßen Griffbauteil. In dem Beispiel der Fig. 10a weist das Anbauteil eine semi-transparente dekorative Schicht über einem transparenten Ring auf, so dass der Ring insgesamt von der Lichtquelle, die gestrichelt angedeutet ist, beleuchtet wird. Die Fig. 10b, 10c und 10d zeigen Anbauteile in Form opaker Ringe, die Öffnungen zur Abgabe des Lichtes der Lichtquelle haben, die seitlich oder in der Mitte der Ringe angeordnet sind, wobei seitliche Öffnungen zum Griffbauteil oder zur Innenverkleidung hin weisen können. Die Erfindung ist auf keine bestimmte Abstrahlrichtung beschränkt.

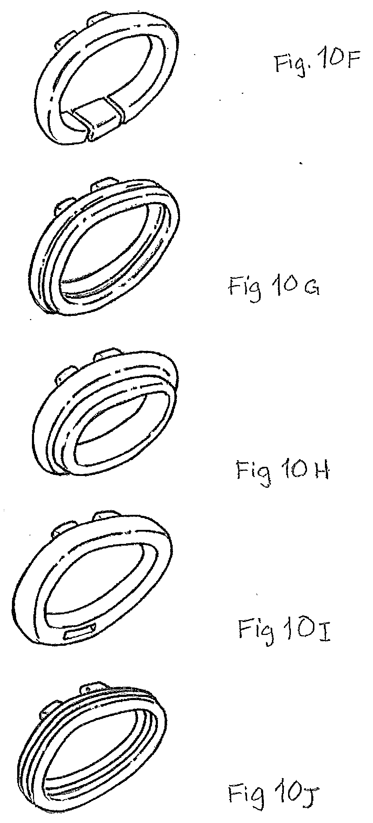

Fig. 10e zeigt ein weiteres Ausführungsbeispiel eines Anbauteils in Form eines Einsatzes, der die Gestalt eines Teilrings hat. Fig. 10f und 10g zeigen zwei weitere Ausführungsbeispiele des Anbauteils mit unterschiedlichen Bereichen für den Austritt des Lichtes. In Fig. 10f tritt das Licht nur über einen begrenzten Abschnitt des Ringes aus, während in Fig. 10g der Ring eine umlaufende Lichtquelle bildet.

Fig. 10h zeigt ein Ausführungsbeispiel, bei dem die lichtabstrahlende Fläche sich um den gesamten Umfang des Rings erstreckt, jedoch eine Stufe oder einen Absatz aufweist und dadurch, im eingebauten Zustand, zumindest teilweise verborgen sein kann.

Im Ausführungsbeispiel der Fig. 10i ist die Austrittsöffnung für die Lichtquelle an dem Ring seitlich angeordnet. Im Ausführungsbeispiel der Fig. 10j weist der Ring eine umlaufende Fläche zum Abgeben von Licht zum Umfang des Rings sowie zur Seite des Rings auf.

Die Erfindung schafft eine Lösung zur Beleuchtung der Umgebung eines Griffbauteils an der Innenverkleidung eines Kraftfahrzeuges, die extrem einfach und kostengünstig herzustellen und zu montieren ist. Die Erfindung kann auch zur Beleuchtung des Griffbauteils selbst oder nur des Anbauteils als Orientierungshilfe und dekoratives Element eingesetzt werden. Durch die Anordnung der Lichtquelle in dem Anbauteil und das Vorsehen des Beleuchtungsmoduls werden Positionierung, Dimensionierung und Befestigung der Lichtquelle unkompliziert zusammengefasst und realisiert. Das Beleuchtungsmodul und das Anbauteil können vorab montiert und auf einfache Weise an dem Griffbauteil angebracht werden. Es ist möglich, das Beleuchtungsmodul außerhalb oder innerhalb des Korpus des Griffbauteils anzuordnen, wobei die Anbringung des Beleuchtungsmoduls und des Anbauteils ohne Spezialwerkzeuge möglich ist. Die Lösung eignet sich auch für beschichtete und kaschierte Griffbauteile und erfordert in ihrer bevorzugten Ausführung keine Modifikation des Korpus des Griffbauteils. Die Erfindung erlaubt es auch, ohne Probleme unterschiedliche Ausstattungen für die Beleuchtung der Griffbauteile vorzusehen.

### Bezugszeichenliste

- 10: Griffbauteil
- 12: Innenverkleidung
- 14: Einsatz
- 16: Armauflage
- 18, 20: Ringe, Anbauteil
- 22: Lichtquelle
- 24: ausgeleuchteter Bereich
- 26, 28: Ring, Anbauteil
- 30: Innenverkleidung einer Heckklappe
- 32: Ladeboden
- 34, 36: Ring, Anbauteil
- 38: Mittelkonsole
- 40, 42: Ringe, Anbauteil
- 44: Dachhimmel
- 46: Ring, Anbauteil
- 48: Korpus
- 50: Beleuchtungsmodul
- 52: flexible Leiterplatte
- 54: Anschlussstecker
- 56: Ausnehmung
- 58: verjüngter Abschnitt
- 60, 62: Ausnehmungen
- 64: LED-Gehäuse
- 66: Flachbandkabel
- 68: Durchbruch

## Patentansprüche

1. Griffbauteil (10) eines Kraftfahrzeugs mit einem Korpus (48) und wenigstens einem dekorativen Anbauteil (18, 20; 26, 28; 34, 36; 40, 42), das die Form eine Ringes oder eines Teilringes hat, welcher auf den Korpus (48) aufgebracht ist und das Griffbauteil seitlich abschließt, wobei eine Lichtquelle (22) in das Anbauteil integriert ist.

2. Griffbauteil (10) nach einem der vorangehenden Ansprüche, **dadurch gekennzeichnet, dass** das Anbauteil (18, 20; 26, 28; 34, 36; 40, 42) in dem Korpus (48) form- und/oder kraftschlüssig gehalten und selbstpositionierend ist.

3. Griffbauteil (10) nach einem der vorangehenden Ansprüche, **dadurch gekennzeichnet, dass** das Anbauteil (18, 20; 26, 28; 34, 36; 40, 42) an dem Korpus (48) lösbar, insbesondere mittels einer Rast- oder Schnappverbindung, mittels Schrauben oder Stiften befestigt ist.

4. Griffbauteil (10) nach einem der vorangehenden Ansprüche, **dadurch gekennzeichnet, dass** die Lichtquelle (50) wenigstens eine LED umfasst.

5. Griffbauteil (10) nach einem der vorangehenden Ansprüche mit einem Beleuchtungsmodul (50), das die Lichtquelle (22), eine Leiterplatte, welche die Lichtquelle (22) trägt, und einen Schaltkreis für die Lichtquelle (22) auf der Leiterplatte umfasst.

6. Griffbauteil (10) nach Anspruch 5, **dadurch gekennzeichnet, dass** die Leiterplatte eine flexible Leiterplatte (52), die Versorgungs- und/oder Ansteuerleitungen für die Lichtquelle (22) trägt, oder eine starre Leiterplatte umfasst.

7. Griffbauteil (10) nach einem der vorangehenden Ansprüche, **dadurch gekennzeichnet, dass** die Lichtquelle (22) mit dem Anbauteil fest verbunden ist.

8. Griffbauteil (10) nach Anspruch 7, **dadurch gekennzeichnet, dass** die Lichtquelle (22) an das Anbauteil angeklebt, angeschweißt oder angeformt ist.

9. Griffbauteil (10) nach einem der vorangehenden Ansprüche, **dadurch gekennzeichnet, dass** Versorgungs- und/oder Ansteuerleitungen der Lichtquelle (22) an der Außen- oder Innenseite des Korpus (48) zu der Lichtquelle (22) geführt sind.

10. Griffbauteil (10) nach einem der vorangehenden Ansprüche, **dadurch gekennzeichnet, dass** das Anbauteil (18, 20; 26, 28; 34, 36; 40, 42) eine Durchbrechung (68) aufweist, bei der das von der Lichtquelle (22) ausgestrahlte Licht austritt.

11. Griffbauteil (10) nach Anspruch 10, **dadurch gekennzeichnet, dass** in der Durchbrechung (68) eine Licht formende Abdeckung, insbesondere eine Linsenanordnung oder eine Diffusoroptik, über der Lichtquelle (22) angeordnet ist.

12. Griffbauteil (10) nach Anspruch 11, **dadurch gekennzeichnet, dass** die Abdeckung eine Licht streuende Folie umfasst.

13. Griffbauteil nach einem der Ansprüche 1 bis 9, **dadurch gekennzeichnet, dass** das Anbauteil aus einem transparenten oder semitransparenten Material hergestellt ist.

14. Griffbauteil (10) nach einem der vorangehenden Ansprüche, **dadurch gekennzeichnet, dass** das Griffbauteil (10) zur Anbringung an einer Fahrzeuginnenverkleidung (12), insbesondere an oder über einer Fahrzeugtür, an einem Dachhimmel (44), an einer Fahrzeugkonsole, an einer Heckklappe oder an einem Ladeboden (32), konfiguriert ist.

15. Griffbauteil (10) nach Anspruch 14, **dadurch gekennzeichnet, dass** die Lichtquelle (22) in dem Griffbauteil (10) so eingerichtet ist, dass sie Licht zur Beleuchtung der Fahrzeuginnenverkleidung (12), des Griffbauteils (10) selbst oder zur Hintergrundbeleuchtung abgibt.

## Claims

1. Handle member (10) for a motor vehicle having a body (48) and at least one decorative attachment piece (18, 20; 26, 28; 34, 36; 40, 42) and having the shape of a ring or a partial ring which is mounted on the body (48) and which finishes the handle member at one side thereof, wherein a light source (22) is integrated in the attachment piece.

2. Handle member (10) according to any of the preceding claims, **characterized in that** the attachment piece (18, 20; 26, 28; 34, 36; 40, 42) is form- and/or force-fitted and is self-positioning in the body (48).

3. Handle member (10) according to any of the preceding claims, **characterized in that** the attachment piece (18, 20; 26, 28; 34, 36; 40, 42) is detachably affixed to the body (48), in particular by a click-on or snap-on connection, by means of screws or pins.

4. Handle member (10) according to any of the preceding claims, **characterized in that** the light source (50) comprises at least one LED.

5. Handle member (10) according to any of the preceding claims, having a lighting module (50) which comprises the light source (22), a printed circuit board carried by the light source (22) and a circuit for the light source (22) on the printed circuit board.

6. Handle member (10) according to claim 5, **characterized in that** the printed circuit board comprises a flexible printed circuit board (52) which carries the current supply and/or control leads for the light source (22), or a rigid printed circuit board.

7. Handle member (10) according to any of the preceding claims, **characterized in that** the light source (22) is securely connected to the attachment piece.

8. Handle member (10) according to claim 7, **characterized in that** the light source (22) is adhered, welded or molded to the attachment piece.

9. Handle member (10) according to claim 8, **characterized in that** the current supply and/or control leads of the light source (22) are guided to the light source (22) along the outside or inside of the body (48).

10. Handle member (10) according to any of the preceding claims, **characterized in that** the attachment piece (18, 20; 26, 28; 34, 36; 40, 42) has an opening (68) at which light emitted from the light source (22) exits.

11. Handle member (10) according to claim 10, **characterized in that** arranged within the opening (68) over the light source (22) is a light-shaping covering, in particular a lens arrangement or diffusor optics.

12. Handle member (10) according to claim 11, **characterized in that** the covering comprises a light-diffusing film.

13. Handle member (10) according to one of claims 1 to 9, **characterized in that** the attachment piece is made from a transparent or semitransparent material.

14. Handle member (10) according to any of the preceding claims, **characterized in that** the handle member (10) is designed to be mounted on an interior vehicle trim (12), in particular on or over a vehicle door, on a roof liner (44), on a vehicle console, on a liftgate or on a loading bed (32).

15. Handle member (10) according to claim 14, **characterized in that** the light source (22) is arranged in the handle member (10) in such a way that it emits light for illuminating the interior vehicle trim (12), the handle member (10) itself or for purposes of background illumination.

## Revendications

1. Composant de poignée (10) d'un véhicule automobile avec un corps (48) et au moins une partie rapportée (18, 20 ; 26, 28 ; 34, 36 ; 40, 42) décorative qui a la forme d'un anneau ou d'un anneau partiel qui est mis en place sur le corps (48) et qui termine le composant de poignée latéralement, une source de lumière (22) étant intégrée dans la partie rapportée

2. Composant de poignée (10) selon l'une des revendications précédentes, **caractérisé en ce que** la partie rapportée (18, 20 ; 26, 28 ; 34, 36 ; 40, 42) est retenue dans le corps (48) par liaison de forme et/ou de force et est auto-positionnée.

3. Composant de poignée (10) selon l'une des revendications précédentes, **caractérisé en ce que** la partie rapportée (18, 20 ; 26, 28 ; 34, 36 ; 40, 42) est fixée sur le corps (48) de façon détachable, en particulier au moyen d'une liaison à encliquetage ou enclenchement, au moyen de vis ou de broches.

4. Composant de poignée (10) selon l'une des revendications précédentes, **caractérisé en ce que** la source de lumière (50) comprend au moins une LED.

5. Composant de poignée (10) selon l'une des revendications précédentes, avec un module d'éclairage (50) qui comprend la source de lumière (22), un circuit imprimé qui porte la source de lumière (22) et un circuit électrique pour la source de lumière (22) sur le circuit imprimé.

6. Composant de poignée (10) selon la revendication 5, **caractérisé en ce que** le circuit imprimé comprend un circuit imprimé (52) flexible qui porte des lignes d'alimentation et/ou de pilotage pour la source de lumière (22), ou un circuit imprimé rigide.

7. Composant de poignée (10) selon l'une des revendications précédentes, **caractérisé en ce que** la source de lumière (22) est raccordée de façon fixe à la partie rapportée.

8. Composant de poignée (10) selon la revendication 7, **caractérisé en ce que** la source de lumière (22) est raccordée à la partie rapportée par collage, soudage ou surmoulage.

9. Composant de poignée (10) selon l'une des revendications précédentes, **caractérisé en ce que** des lignes d'alimentation et/ou de pilotage de la source de lumière (22) sont guidées sur le côté extérieur ou intérieur du corps (48) vers la source de lumière (22).

10. Composant de poignée (10) selon l'une des revendications précédentes, **caractérisé en ce que** la partie rapportée (18, 20 ; 26, 28 ; 34, 36 ; 40, 42) présente un percement (68) au niveau duquel sort la lumière émise par la source de lumière (22).

11. Composant de poignée (10) selon la revendication 10, **caractérisé en ce qu'**un revêtement modelant la lumière, en particulier un agencement de lentilles ou une optique de diffuseur, est disposé dans le percement (68) au-dessus de la source de lumière (22).

12. Composant de poignée (10) selon la revendication 11, **caractérisé en ce que** le revêtement comprend une feuille diffusant la lumière.

13. Composant de poignée (10) selon l'une des revendications 1 à 9, **caractérisé en ce que** la partie rapportée est réalisée en matériau transparent ou semi-transparent.

14. Composant de poignée (10) selon l'une des revendications précédentes, **caractérisé en ce que** le composant de poignée (10) est configuré pour être mis en place sur un habillage intérieur de véhicule (12), en particulier sur ou au-dessus d'une portière de véhicule sur un pavillon de toit (44), sur une console de véhicule, sur un hayon ou sur un plancher de chargement (32).

15. Composant de poignée (10) selon la revendication 14, **caractérisé en ce que** la source de lumière (22) est aménagée dans le composant de poignée (10) de telle sorte qu'elle délivre de la lumière pour éclairer l'habillage intérieur de véhicule (12), le composant de poignée (10) lui-même ou pour éclairer l'arrière-plan.
